Europäisches Patentamt

European Patent Office

Office européen des brevets

(11) Publication number: **0 356 243**
**A2**

# EUROPEAN PATENT APPLICATION

(21) Application number: **89308614.0**

(22) Date of filing: **24.08.89**

(51) Int. Cl.5: **G 07 F 7/02**
**G 07 F 13/02**

(30) Priority: **26.08.88 JP 212675/88**

(43) Date of publication of application:
**28.02.90 Bulletin 90/09**

(84) Designated Contracting States: **DE FR GB**

(71) Applicant: **DAITU SANGYO CO., LTD.**
**1-6, Chuo-cho Sakaide-shi**
**Kagawa (JP)**

(72) Inventor: **Suekane, Hiromasa**
**1-9, Chuo-cho**
**Sakaide-shi Kagawa (JP)**

(74) Representative: **Milhench, Howard Leslie et al**
**R.G.C. Jenkins & Co. 26 Caxton Street**
**London SW1H 0RJ (GB)**

(54) Prepaid card processing device for use in a filling station.

㊼ A card processing device for use in a filling station includes a magnetic head adapted to read a remaining unit count recorded on a prepaid card inserted into the device to transfer it to a CPU. The amount of fuel sold is inputted in the CPU through an input device. The unit price of fuel stored in a memory unit is also inputted in the CPU. The CPU calculates the sales amount of fuel and the renewed remaining unit count according to the above data. The current remaining unit count, the amount of gasoline sold and other necessary information are displayed on a display device connected to the CPU. Upon completion of fueling, the renewed remaining unit count is recorded magnetically on the card by the magnetic head and printed thereon by a printing device. The card is adapted to be moved through the processing device by a motor controlled by the CPU.

FIG. 1B

The remaining unit count of this card is 680.

EP 0 356 243 A2

**Description**

## PREPAID CARD PROCESSING DEVICE FOR USE IN A FILLING STATION

The present invention relates to a prepaid card processing device for use in a filling station and a prepaid card for use with the card processing device.

As with telephone cards and other prepaid cards, the prepaid card according to the present invention is purchased from a service station beforehand in order to omit troublesome exchange of cash at the time of purchase of gasoline.

An object of the present invention is to provide a prepaid card processing device adapted to be used in a filling station.

Other features and objects of the present invention will become apparent from the following description taken with reference to the accompanying drawings, in which:

Fig. 1A is a perspective view of the card processing device in the first embodiment of the present invention;

Fig. 1B is a schematic view of the same showing the interior mechanism of the same;

Fig. 2A is a top plan view of the prepaid card in the first embodiment;

Fig. 2B is a bottom plan view of the same showing the details of the magnetic stripe of the same;

Figs. 3A to 3C are front views of the display of the card processing device showing examples of signs thereon;

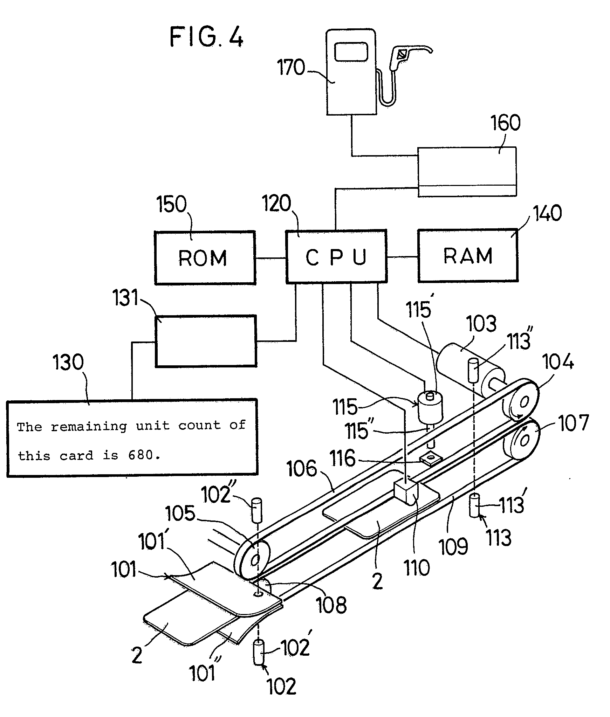

Fig. 4 is a schematic view of the card processing device in the second embodiment showing its interior mechanism;

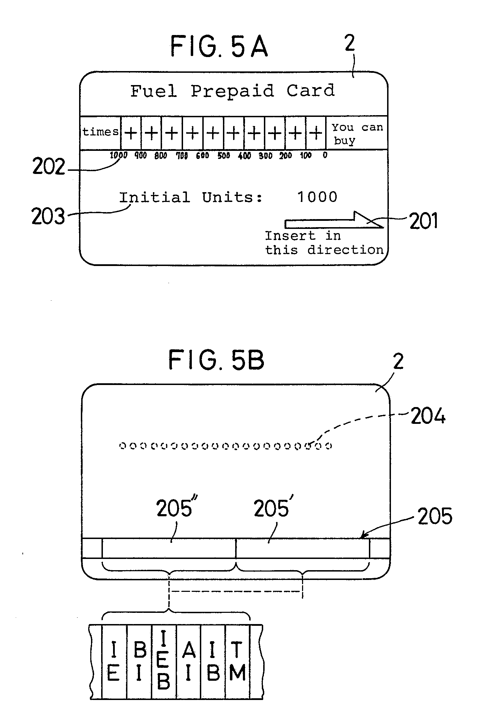

Fig. 5A is a top plan view of the prepaid card in the second embodiment;

Fig. 5B is a bottom plan view of the same;

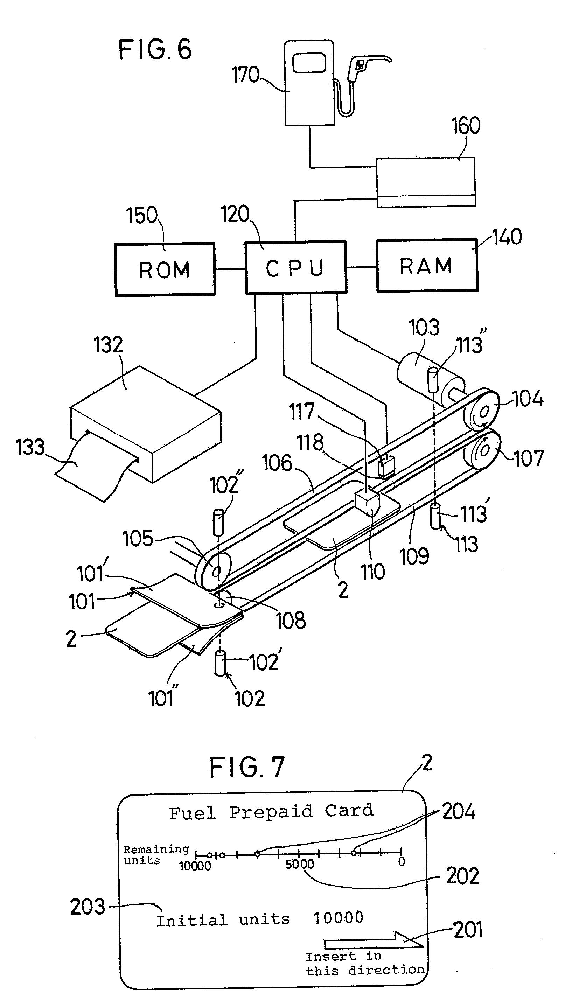

Fig. 6 is a schematic view of the card processing device in the third embodiment; and

Fig. 7 is a plan view of the prepaid card in the third embodiment.

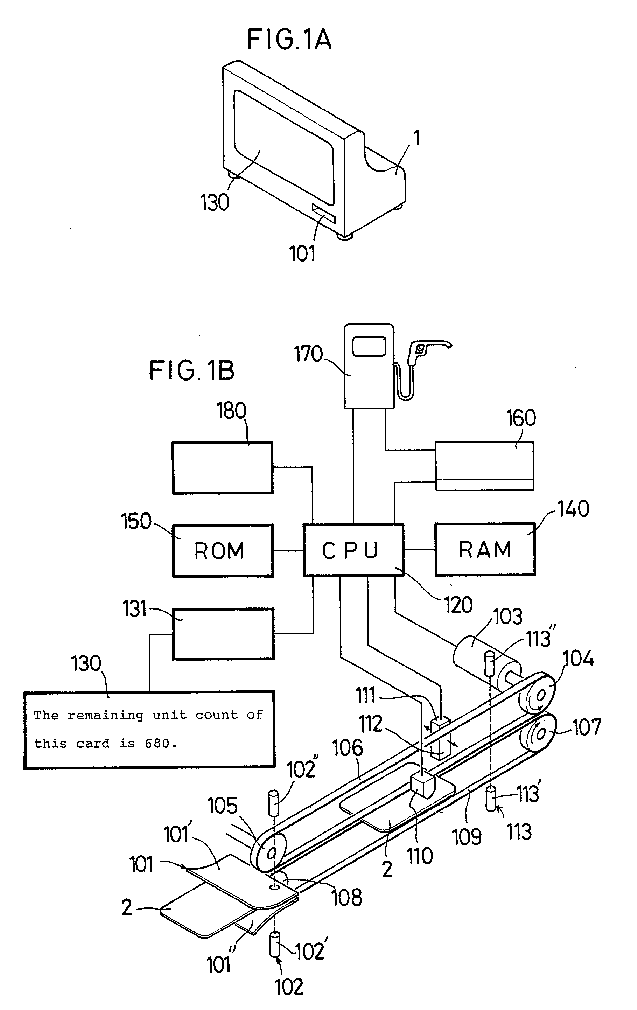

The card processing device 1 according to the present invention shown in Figs. 1A and 1B is of substantially the same type as those used for processing telephone cards and other prepaid cards and is used to change the value data stored in a data register unit of the prepaid card. It may be fixedly mounted on a fuel-supply pump or fixedly or movably placed near the pump.

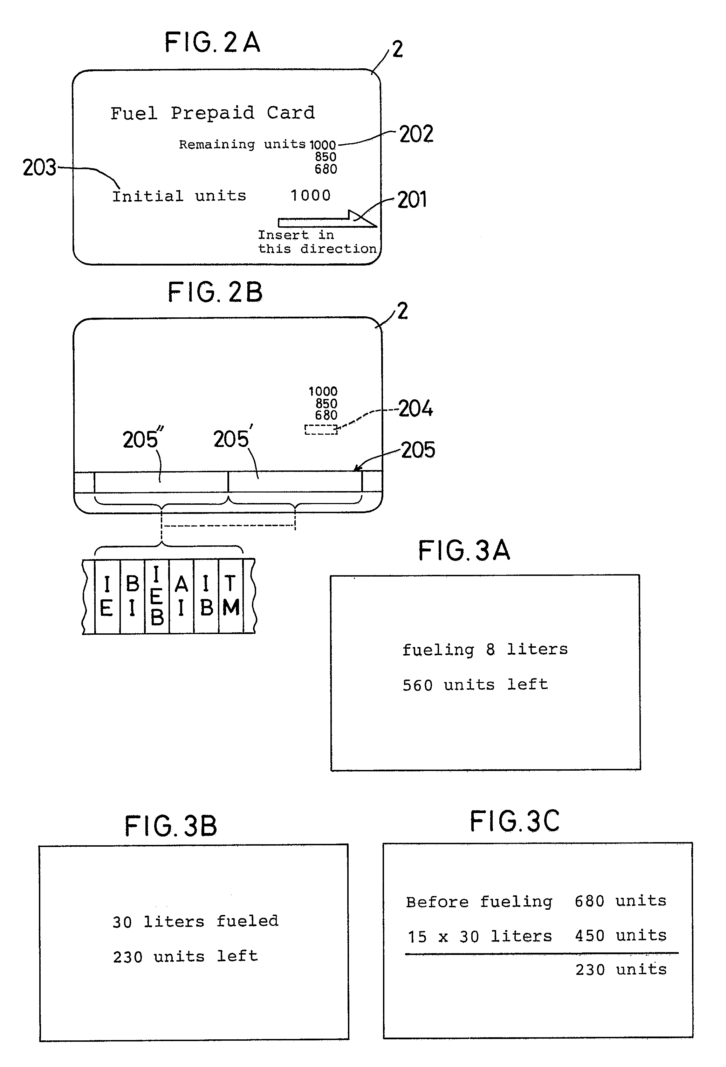

Now referring to Figs. 2A to 2C, the prepaid card 2 according to the present invention has an arrow 201 printed thereon to show the direction of insertion.

Every time the bearer of the card has purchased gasoline with the card, the remaining unit count indicating the value left available to purchase gasoline will be printed on the card at location 202 by means of a printing device which is to be described later. Numeral 204 in Fig. 2B indicates the area where the next remaining unit count is to be printed. Also the initial unit count at the time of purchase of the card is printed on the card at 203.

Also as shown in Fig. 2B, the card is provided with a magnetic stripe 205 comprising a main memory block 205′ and a backup memory block 205″ adapted to be used in case the main memory 205′ is destroyed. As shown in Fig. 2C, in each of the memory blocks 205′ and 205″ are stored from right to left timing data TM, data start mark IB, remaining unit count after use AI, data end and data start mark IEB, remaining unit count before use BI and data end mark IE.

Figs. 1A and 1B show the card processing device 1 for reading the data on the card 2 and writing renewed data thereon. As shown in Fig. 1B, the card 2 is inserted into the processing device 1 through a card insert slot 101 defined by upper and lower curved guide plates 101′ and 101″. There is provided near the card insert slot 101 a first photosensor 102 comprising a light emitter 102′ and a light receptor 102″. The light emitted from the light emitter 102′ toward the light receptor 102″ will be intercepted by the card 2.

This will close a motor circuit, thus rotating a motor 103 in a forward direction and turning a main roller 104 connected direclty to the motor 103 in the direction of arrow. As the main roller 104 rotates, a belt 106 put therearound will be moved in one direction, thus turning a free roller 105, and at the same time a roller 107 in engagement with the main roller 104 will be turned in the direction of arrow. By the rotation of the roller 107, a belt 109 will be moved in one direction, thus turning another free roller 108. Thus the card 2 sandwiched between the belts 106 and 109 will proceed through the processing device 1. The motor 103, a magnetic head 110 and the printer 111 are all controlled by a central processing unit (CPU) 120 according to a program stored in a ROM 150. The CPU 120 is also connected to a fuel-supply pump 170. When the card 2 proceeds to such a position as to intercept the light from a light emitter 113′ in a second photosensor 113, its light receptor 113″ will detect the interception of light and stop the motor 103 to hold the card at a standstill.

While the card 2 is being fed through the device 1, the current remaining unit count AI recorded on the magnetic stripe 205 of the card 2 (Fig. 2B) will be read by the magnetic head 110 and fed into the CPU 120 through an interface (not shown). The count AI will be notified to the bearer of the card by indicating it on a display 130 connected to the CPU 120 through display drivers 131. The display 130 may be a CRT or may be made of liquid crystals, EL elements, electrochromics or light emitting diodes. The type of display may be a segment type or a matrix type. In order to reduce the number of display drivers, the dynamic driving method should preferably be employed. The remaining unit count AI is temporarily stored in a RAM 140.

By referring to the remaining unit count or the balance shown on the display 130, the bearer of the card instructs the amount of gasoline to be purchased to an attendant at the station. While gasoline is being fed from the pump 170, the data on the feed amount will be fed moment by moment into the CPU 120 through an input device 160 for processing the data from the pump 170. The numerical data on the feed amount is multiplied by the unit price in the CPU 120 and the feed amount and the remaining unit count are shown on the display 130 at intervals of e.g. 5 seconds as shown in Fig. 3A.

Upon completion of fueling, the final feed amout and the remaining unit count are shown on the display 130 as shown in Fig. 3B. To prevent any possible trouble with the customer, the CPU 120 may be provided with the function of displaying the count before fueling which is stored in the RAM together with the count after fueling as shown in Fig. 3C.

Thereafter, the motor 103 will be rotated in a reverse direction to the direction of arrow by the CPU 120 to move the card 2 from right to left in Fig. 1A until it reaches the printing position. Then the card 2 is moved in the direction of arrow 112 until its next printing segment is located right under the printing device 111 for printing the renewed remaining unit count.

If a card 2 with the initial unit count of 1000 is used for the first time to purchase fuel by the amount equivalent to 150 units, the remaining unit count or balance 850 is printed as shown in Fig. 2A at 202. If the card is then used to purchase gasoline by the amount equivalent to 170 units, the remaining unit count 680 will be printed under the number 850. If the card is used next time by 450 units, the CPU 120 will move the card by controlling the motor 103 to such a position that its segment 204 is located right under the printing device 111. Then the printing device will print the count 230 (680 minus 450) on the segment 204 in response to the command from the CPU 120.

Such remaining unit counts printed on the card are also stored in an auxiliary memory 180 in response to the command from the CPU 120. The memory 180 may be a floppy disk, a fixed disk, a magnetic tape, a cassette tape or any other known storage means. It contains a file in which are stored purchase records of so many customers as not to be storable in ROMs.

Then the motor 103 will start turning in the reverse direction again to carry the card 2 out of the device 1. When the portion of the card 2 for storing the data on the remaining unit count BI is passing under the magnetic head 110 while being carried out, the CPU 120 will read the remaining unit count before use stored in the RAM 140 (which is currently 680) and command the magnetic head 110 to magnetically record it on the BI segment of the card 2. When the AI segment of the card (Fig. 2B) is passing under the magmetic head 110, the CPU 120 will now read the remaining unit count after use also stored in the RAM 140 (which is currently 230) and command the magnetic head 110 to record it on the AI segment. This means that the count before use recorded on the AI segment is replaced with the count after use and the former is transferred onto the BI segment to replace the older count on the BI segment. Though the counts recorded on the BI segment are erased one after another, the same data are stored in the auxiliary memory 180.

The card 2 according to the present invention will free customers as well as attendants at filling stations from troublesome exchange of cash. Also the provision of the display which shows the moment-by-moment purchase data will minimize trouble with customers.

In the preferred embodiment, the pump 170 is connected with the input device 160 so that the data from the pump will be automatically sent to the CPU 120 through the input device 160. But the data on the amount of gasoline sold may be inputted manually into the CPU through the input device 160 to cut down the running cost. Thereafter, the CPU 120 will read the unit price of gasoline stored in the RAM 140 and perform multiplication.

The display may be provided with the function of blinking the sign thereon if the remaining unit count on balance on the card 2 runs into zero while fueling in order to give a warning to the customer as well as the attendant and to urge the customer to buy a new card.

According to the present invention, the remaining unit count is printed on the card 2 instead of punching the card in the corresponding area as with a conventional prepaid card such as a telephone card. This will allow the bearer of the card to check the former purchase records as well as the current balance at a glance with accuracy.

Though the card 2 can keep only the last two purchase records on the magnetic stripe, all the purchase records of every customer can be stored in the auxiliary memory 180. This will be of a great help in preventing the trouble with customers concerning the former purchase records.

[Second Embodiment]

In this embodiment, the card 2 has an area 202 for punching which is marked with numbers showing the remaining unit count at every corresponding point of the punching area.

The card processing device 1 is provided with a punching device 115 including a puncher 115″.

Upon completion of fueling, the CPU 120 commands the motor 103 to turn in the reverse direction to move the card 2 from right to left of Fig. 1B until it reaches a predetermined punching position which is determined by the current remaining unit count. For examples, if the card 2 with a remaining unit count of 680 is used for fueling by the amount equivalent to 450 units, the remaining unit count will be 230. The CPU 120 will move the card 2 so that its punching point 204 which corresponding to the remaining unit count 230 will be located just under the puncher 115″ of the punching device 115.

The CPU 120 will then apply a signal to a solenoid 115′ of the punching device 115 to lower the puncher 115″ until it is received in a hole in a base 116. A punch hole is thus formed in the punching point 204 corresponding to the remaining unit count 230.

Otherwise, this embodiment is the same in structure and function as the first embodiment.

## [Third Embodiment]

In this embodiment, after every fueling, a mark 204 is printed on the card 2 at a point corresponding to the current remaining unit count. Graduated numbers 202 indicate the remaining unit count represented by each mark 204.

In this embodiment, a sales slip dispenser 132 is provided in place of the display 130 in the first embodiment. The remaining unit count after use is transferred to the sales slip dispenser 132 through the CPU 120. Then a sales slip 133 which indicates the amount of gasoline sold in liters and the sales amount and the balance in predetermined units is issued by the dispenser 132.

The sales slip dispenser 132, which is used merely to print out the outputs of the CPU as it is, may be any conventional printer such as a type drum printer, a type belt printer or a high-speed laser printer.

The remaining unit count before use stored in the RAM 140 may be printed on the sales slip together with the above data to prevent any conceivable trouble with the customer.

After issuance of the sales slip, the CPU 120 will command the motor 103 to turn in the reverse direction to carry the card 2 from right to left of Fig. 1B until it reaches a predetermined marking position determined by the remaining unit count after use. If the card has a remaining unit count of 6800 before use and is used by 4500 units, the remaining unit count after use will be 2300. The CPU will thus turn the motor 103 to bring the card 2 to such a position that the next marking point 204 (Fig. 2) corresponding to the count 2300 is located right under an ink head of a marking device 117.

The CPU 120 will then transmit a signal to a solenoid (not shown) of the marking device 117 to lower the ink head 118. The card 2 will be thus marked at a point corresponding to the count 2300.

In the third embodiment, sales slips 133 are issued by the dispenser 132. But they may be issued by a printer mounted on the input device 160.

## Claims

1. A prepaid card processing device for use at a filling station which is adapted and arranged to provide a visible indication on the card after use of the remaining value of the card.

2. A prepaid card processing device as claimed in claim 1 wherein the indication is provided by printing a remaining value indication in numbers on the card.

3. A prepaid card processing device as claimed in claim 1 wherein the indication is provided by providing a pre-printed scale of values on the card and providing an indicator at a position on the card indicative of the remaining value on said scale.

4. A prepaid card processing device as claimed in claim 3 wherein the indicator is a hole punched in the card.

5. A prepaid card processing device as claimed in claim 3 wherein the indicator is a mark printed on the card.

6. A prepaid card processing device as claimed in any of the preceding claims wherein a CPU is provided to extract data that is recorded on the card and to process such data with data from a pump at the filling station in order to derive data for generating said visible indication.

7. A prepaid card processing device as claimed in claim 6 wherein a display device is provided and the CPU is adapted and arranged to display transaction information on said display device.

8. A prepaid card processing device as claimed in claim 6 or 7 wherein a record of sales transactions to date effected with the card is recorded on the card and the card processing device is adapted and arranged to update such record as each new transaction is effected.

9. A prepaid card processing device as claimed in any of the preceding claims which is adapted and arranged to provide an indication to a user in the event of the residual value of the card reducing below a predetermined level.

10. A prepaid card processing device for use in a filling station, comprising a central processing unit or CPU, a magnetic head for reading a remaining unit count recorded on a prepaid card to transfer it to said CPU and writing a renewed remaining unit count supplied from said CPU on said card, an internal memory unit 140 connected to said CPU to store data on the unit price of fuel and the remaining unit count read by said magnetic head while said CPU is turned on, an external memory unit connected to said CPU to permanently store said data, an input device connected to said CPU to input data on the amount of fuel sold to said CPU, said CPU being adapted to calculate the sales amount and the current remaining unit count based upon the amount of gasoline sold, the unit price and the remaining unit count read by said magnetic head, a display connected to said CPU to display the sales amount of gasoline and the current remaining unit count in response to the command from said CPU, a printing device for printing the renewed remaining unit count supplied from said CPU on said prepaid card upon completion of fueling, a motor for moving said card, and sensor means for detecting the position of said card, said CPU being adapted to control the movement of said card through said processing device based upon the information from said sensor means.

# FIG.1A

# FIG.1B

The remaining unit count of
this card is 680.

## FIG. 2A

Fuel Prepaid Card

Remaining units 1000 ——— 202
                 850
                 680

203 —— Initial units    1000

201

Insert in
this direction

2

## FIG. 2B

1000
850
680 ——— 204

205″    205′    205

I  B  I  A  I  T
E  I  E  I  B  M
      B

2

## FIG. 3A

fueling 8 liters

560 units left

## FIG. 3B

30 liters fueled

230 units left

## FIG. 3C

Before fueling   680 units

15 x 30 liters   450 units
_____

                 230 units

# FIG. 4

The remaining unit count of
this card is 680.

# FIG. 5A

2

Fuel Prepaid Card

| times | + | + | + | + | + | + | + | + | + | + | You can buy |
|---|---|---|---|---|---|---|---|---|---|---|---|

202 — 1000 900 800 700 600 500 400 300 200 100 0

203 — Initial Units: 1000

201

Insert in
this direction

# FIG. 5B

2

204

205″    205′    205

| I | B | I | A | I | T |
|---|---|---|---|---|---|
| E | I | E | A | B | M |
|   |   | B | I |   |   |

# FIG. 6

# FIG. 7

Fuel Prepaid Card

Remaining units

10000          5000          0

Initial units   10000

Insert in
this direction